Europäisches Patentamt

(19) European Patent Office

Office européen des brevets

(11) Veröffentlichungsnummer: **0 161 347**
**B1**

(12) **EUROPÄISCHE PATENTSCHRIFT**

(45) Veröffentlichungstag der Patentschrift:
**16.09.87**

(51) Int. Cl.⁴: **B 65 G 17/06**

(21) Anmeldenummer: **84116264.7**

(22) Anmeldetag: **22.12.84**

(54) **Plattenbandförderer.**

(30) Priorität: **13.04.84 DE 3413910**

(43) Veröffentlichungstag der Anmeidung:
**21.11.85 Patentblatt 85/47**

(45) Bekanntmachung des Hinweises auf die Patenterteilung:
**16.09.87 Patentblatt 87/38**

(84) Benannte Vertragsstaaten:
**DE FR GB IT**

(56) Entgegenhaltungen:
**DE - A - 1 944 026**
**DE - A - 2 850 000**

(73) Patentinhaber: **ROBERT BOSCH GMBH, Postfach 50, D-7000 Stuttgart 1 (DE)**

(72) Erfinder: **Krieger, Eberhard, Lindenstrasse 11, D-7056 Weinstadt 5 (DE)**
Erfinder: **Moser, Theo, Schubertstrasse 7, D-7062 Steinenberg (DE)**

EP 0 161 347 B1

ACTORUM AG

## Beschreibung

### Stand der Technik

Die Erfindung geht aus von einem Plattenbandförderer nach der Gattung des Hauptanspruchs. Bei einem bekannten Plattenbandförderer dieser Art haben die in Form einer geschlitzten Öse ausgebildeten Klauen der Tragelemente einen Grund, der dem Durchmesser der Gelenkbolzen der Gelenkkette angepasst ist, und eine Öffnung, deren Weite wenig kleiner als der Durchmesser der Gelenkbolzen ist. Aufgrund dieser Ausführungsform können die aus Kunststoff bestehenden Tragelemente an der Gelenkkette durch Aufstecken auf die Gelenkbolzen montiert werden, wobei sich die etwas nachgiebigen Klauen beim Aufstecken zunächst etwas weiten und darauf die Bolzen im Grund der Klauen einrasten, so dass die Klauen die Gelenkbolzen zum grössten Teil formschlüssig umgreifen. Um zu verhindern, dass die Tragelemente beim Durchlaufen einer Umlenkstrecke durch die auftretende Fliehkraft von der Kette abspringen, sind die Öffnungsrichtungen der Klauen eines Paares zueinander winkelig. Trotzdem kommt es bei dem bekannten Plattenbandförderer vor, dass ein plötzlich in die Bahn ragender Widerstand einzelne oder auch eine ganze Serie der gesteckten Tragelemente von der Kette abreisst.

### Vorteile der Erfindung

Der erfindungsgemässe Plattenbandförderer mit den kennzeichnenden Merkmalen des Hauptanspruchs hat demgegenüber den Vorteil, dass ohne zusätzlichen Materialaufwand die Halterung der Tragelemente an der Kette durch die gegenseitige Sicherung benachbarter Tragelemente wesentlich verbessert ist. Die Sicherheit für die Halterung der Tragelemente wird noch dadurch vergrössert, dass die Öffnungsrichtungen zweier, den gleichen Bolzen umgreifender Klauen von benachbarten Tragelementen zueinander winkelig versetzt sind, so dass ein Gelenkbolzen von zwei formschlüssig zusammenwirkenden, benachbarten Klauen auf einem nahezu geschlossenen Kreisring umgriffen wird. Durch die in den Unteransprüchen aufgeführten Massnahmen sind vorteilhafte Weiterbildungen des im Hauptanspruch angegebenen Plattenbandförderers möglich.

### Zeichnung

Ein Ausführungsbeispiel der Erfindung ist in der Zeichnung dargestellt und in der nachfolgenden Beschreibung näher erläutert. Es zeigen:

Figur 1 einen Teil eines Plattenbandförderers in Seitenansicht und

Figur 2 einen Teil eines Trummes des Plattenbandförderers nach Figur 1 in Unteransicht.

### Beschreibung des Ausführungsbeispiels

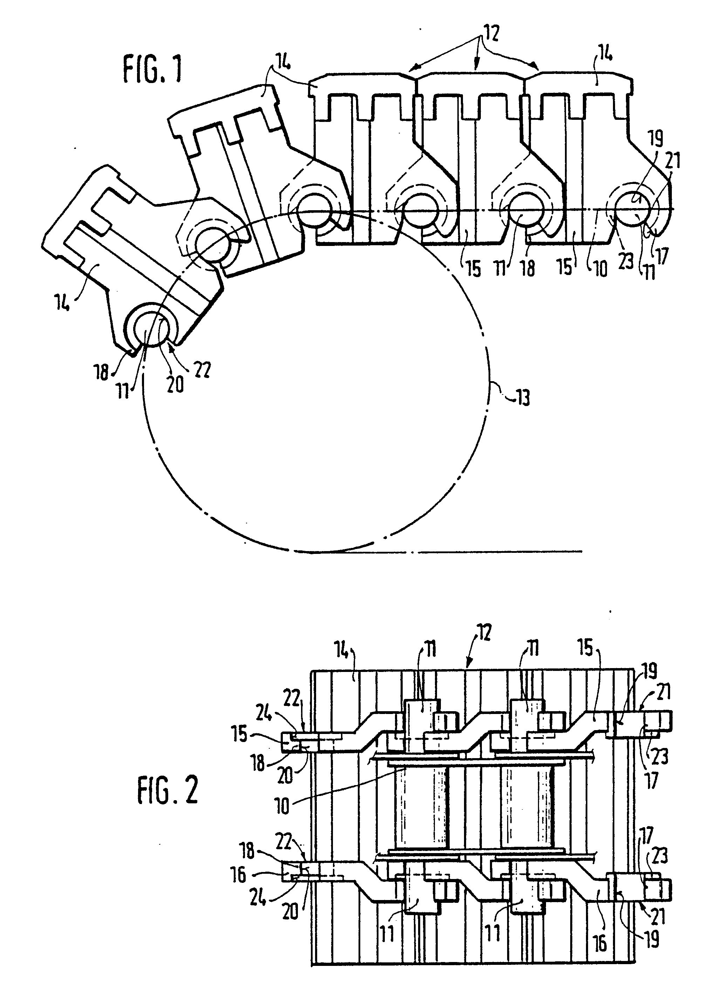

Der Plattenbandförderer hat eine endlose Gelenkkette 10 mit seitlich abstehenden Gelenkbolzen 11 und an diesen befestigte Tragelemente 12. Die Kette 10, die in Figur 1 vereinfacht als strichpunktierte Linie dargestellt ist, ist über Kettenräder 13 geführt und angetrieben, von denen eines ebenfalls vereinfacht strichpunktiert dargestellt ist.

Die Tragelemente 12 haben je eine Platte 14, die sich in der Förderebene waagerecht erstreckt und zwei von der Platte 14 nach unten abstehende, sich in Förderrichtung erstreckende Füsse 15, 16. Der in Förderrichtung vorne liegende Bereich der Füsse 15, 16 ist gegenüber dem hinten liegenden jeweils spiegelbildlich seitlich um die Dicke eines Fusses versetzt, so dass die Fusspaare benachbarter, hintereinander angeordneter Tragelemente 12 teilweise ineinandergreifen können. Zum Befestigen der Tragelemente 12 an der Kette 10 haben die Füsse 15, 16 jeweils eine vordere und eine hintere Klaue 17, 18. Der Abstand der beiden Klauen 17, 18 eines Fusses 15, 16 ist gleich dem Abstand zweier Gelenkbolzen 11 der Gelenkkette 10. Die Klauen 17, 18 umgrenzen eine Bohrung 19, 20, deren Durchmesser gleich dem der Gelenkbolzen 11 ist, und ein schlitzartiges Maul 21, 22. Das Maul 21 der in Förderrichtung vorne liegenden Klauen 17 ist quer zur Ebene einer Platte 14 nach unten und das Maul 22 der in Förderrichtung hinten liegenden Klauen 18 in einem Winkel von etwa 45° schräg zur Ebene der Platten 14 nach hinten und unten gerichtet. Die Weite der Mäuler 21, 22 der Klauen 17, 18 ist etwas kleiner als der Durchmesser der Gelenkbolzen 11, so dass diese formschlüssig drehbar in den Bohrungen 19, 20 rasten.

Um den Tragelementen 12 auf den Gelenkbolzen 11 der Kette 10 einen sicheren Halt auch bei Stössen und Widerständen zu verleihen, sind die Füsse 15, 16 im Bereich ihrer Klauen 17, 18 formschlüssig aber auch gelenkig miteinander verbunden. Dazu ist an den vorderen Klauen 17 auf der den hinteren Klauen 18 zugewandten Seite ein Vorsprung 23 in Form eines Ringes angeordnet, der durch das Maul 21 unterbrochen ist. Der ringförmige Vorsprung 23 ist gleichachsig zur Achse der Bohrung 19 der Klauen 17. Komplementär zu den Vorsprüngen 23 der Klauen 17 haben die hinteren Klauen 18 auf ihrer äusseren, den vorderen Klauen 17 zugewandten Seite eine ringförmige Aussparung 24, in die der Vorsprung 23 der jeweils anliegenden Klaue 17 formschlüssig eingreift. Durch diese axiale, gelenkige Verbindung der jeweils vorderen Klaue 18 eines nacheilenden Tragelements 12 mit den jeweils hinteren Klauen 19 eines voreilenden Tragelements 12 wird ein guter Halt der Tragelemente 12 an den Gelenkbolzen 11 der Kette 10 sichergestellt. Die Halterungssicherheit wird noch dadurch erhöht, dass die Öffnungsrichtung der Mäuler 21, 22 der vorderen und der hinteren Klauen um einen Winkel versetzt ist, so dass sich der Formschluss durch den kombinierten Umfassungswinkel zweier zusammenwirkender Klauen 17 und 18 beinahe über den ganzen Umfang der Gelenkbolzen 11, beim Ausführungsbeispiel über 315° erstreckt. Der kombinierte Formschluss über den gesamten Umfang kann erreicht werden, wenn die Öffnungsrichtung der Mäuler 21 und 22 zweier benachbarter Klauen 17, 18 um 90° und mehr versetzt ist.

Das Bestücken der Gelenkkette 10 mit Tragelementen 12 geht folgendermassen vor sich:

Jeweils ein Tragelement 12 wird mit seinen in Förderrichtung hinten liegenden Klauen 18 an einem Gelenkbolzen 11 in schräg nach hinten geneigter Stellung angesetzt und durch Druck auf die Tragplatte 14 werden die Klauen 18 auf den Gelenkbolzen 11 geschoben, so dass die Gelenkbolzen in den Bohrungen 20 einrasten. Beim Aufschieben auf den Gelenkbolzen 11 weitet sich das Maul 22 der Klaue 18 etwas aufgrund der Elastizität des Werkstoffes, aus dem das Tragelement 12 hergestellt ist. Danach wird das Tragelement 12 in Förderrichtung nach vorne geschwenkt, so dass die vorderen Klauen 17 am vorauseilenden Gelenkbolzen 11 anliegen. Unter der Einwirkung von Druck auf die Tragplatte 14 schnappen dann auch die vorderen Klauen 17 auf dem vorauseilenden Gelenkbolzen 11 in ähnlicher Weise wie oben beschrieben ein. In gleicher Weise werden nacheinander die jeweils in Förderrichtung nacheilenden Tragelemente 12 an der Kette 10 befestigt. Um das Einführen der Vorsprünge 23 in die Aussparungen 24 der Klauen 17, 18 zu gewährleisten, haben die Vorsprünge 23 an der Stelle, die beim Schwenken der Tragelemente 14 zum Ansetzen an den Gelenkbolzen zuerst an den Füssen 15, 16 im Bereich der hinteren Klauen 18 zur Anlage kommen, etwas angeschrägt, so dass ein Einfädeln unter elastischem Ausweichen der benachbarten Klauen 17, 18 und Überschieben möglich ist.

**Patentansprüche**

1. Plattenförderer mit einer Gelenkkette (10) und mit an dieser aufgesteckten Tragelementen (12) aus Kunststoff, die eine Tragplatte (14) und Haltefüsse (15, 16) mit Klauenpaaren (17, 18) aufweisen, welche Gelenkbolzen (11) der Gelenkkette (10) umgreifen, wobei jeweils Klauen (17, 18) zweier benachbarter Tragelemente (12) einen Gelenkbolzen (11) gemeinsam umgreifen, dadurch gekennzeichnet, dass die eine Klaue (17) einen Vorsprung (23) und die andere, benachbarte Klaue (18) eine Aussparung (24) haben und, dass der Vorsprung (23) der einen Klaue (17) eines Tragelements (12) in die Aussparung (24) der Klaue (18) des benachbarten Tragelements eingreift.

2. Plattenbandförderer nach Anspruch 1, dadurch gekennzeichnet, dass die Vorsprünge (23) und die Aussparungen (24) die Form eines Ringbogensegments haben und ineinandergreifend seitlich an den Klauen (17, 18) angeordnet sind.

3. Plattenbandförderer nach Anspruch 2, dadurch gekennzeichner, dass die Tragelemente (12) jeweils zwei Füsse (15, 16) mit jeweils in Förderrichtung vorderen und hinteren Klauen (17, 18) haben, wobei die Füsse verschränkt sind, so dass die hinteren Klauen (18) des voreilenden Tragelements von den vorderen Klauen (17) des nacheilenden Tragelements seitlich umgriffes werden.

4. Plattenbandförderer nach einem der Ansprüche 1 bis 3, dadurch gekennzeichnet, dass die Öffnungsrichtung der im Förderrichtung vorderen Klauen (17) und der in Förderrichtung hinten liegenden Klauen (18) der Tragelemente (12) winkelig versetzt ist.

**Claims**

1. Apron conveyor with an articulated chain (10) and with plastic supporting elements (12) which are attached to this and which have a supporting plate (14) and holding feet (15, 16) having pairs of claws (17, 18) engaging round pivot pins (11) of the articulated chain (10), claws (17, 18) of any two adjacent supporting elements (12) engaging jointly round a particular pivot pin (11), characterized in that one claw (17) has a projection (23) and the other adjacent claw (18) has a recess (24), and in that the projection (23) of the first claw (17) of a supporting element (12) engages into the recess (24) in the claw (18) of the adjacent supporting element.

2. Apron conveyor according to Claim 1, characterized in that the projections (23) and the recesses (24) have the form of a segment of an arc of a circle and are arranged laterally on the claws (17, 18) so as to engage into one another.

3. Apron conveyor according to Claim 2, characterized in that the supporting elements (12) each have two feet (15, 16) with respective claws (17, 18) located at the front and at the rear in the conveying direction, the feet being staggered so that the rear claws (18) of the leading supoporting element are surrounded laterally by the front claws (17) of the trailing supporting element.

4. Apron conveyor according to one of Claims 1 to 3, characterized in that the opening direction of the claws (17), at the front in the conveying direction, and of the claws (18), at the rear in the conveying direction, of the supporting elements (12) is offset angularly.

**Revendications**

1. Bande transporteuse à plaques avec une chaîne à joints d'articulation (10) et avec sur celle-ci des éléments porteurs (12) enfichés, en matière plastique, qui possèdent une plaque support (14) et des pieds de fixation (15, 16) avec des paires de griffes (17, 18), lesquelles saisissent des boulons d'articulation (10), les griffes (17, 18) de deux éléments porteurs (12) voisins saisissent ensemble à chaque fois un boulon d'articulation (11), caractérisée en ce qu'une griffe (17) présente une saillie (23) et que l'autre griffe (18) voisine présente un évidement (24) et que la saillie (23) d'une griffe (17) d'un élément porteur (12) s'engrène dans l'évidement (24) de la griffe (18) de l'élément porteur voisin.

2. Bande transporteuse à plaques selon la revendication 1, caractérisée en ce que les saillies (23) et les évidements (24) ont la forme d'un segment d'arc d'anneau et sont disposés latéralement sur les griffes (17, 18) en s'engrenant entre elles.

3. Bande transporteuse à plaquer selon la revendication 2, caractérisée en ce que les éléments porteurs (12) présentent chaque fois deux pieds (15, 16) avec chaque fois, selon le sens de transport, des griffes avant et arrière (17, 18), les pieds étant à cette occasion emboîtés de telle sorte que les griffes arrière (18) de l'élément porteur précédent s'engrènent latéralement avec les griffes avant (17) de l'élément porteur suivant.

4. Bande transporteuse à plaques selon l'une des revendications 1 à 3, caractérisée en ce que la direction d'ouverture des griffes (17) des éléments porteurs (12), situées en avant, selon le sens du transport et des griffes (18) situées en arrière selon le sens du transport, sont décalées d'un certain angle.

FIG. 1

FIG. 2